# EUROPÄISCHE PATENTSCHRIFT

(11) **EP 2 223 175 B1**
(45) Veröffentlichungstag und Bekanntmachung des Hinweises auf die Patenterteilung: **22.02.2017**
(21) Anmeldenummer: 08861772.5
(22) Anmeldetag: 10.12.2008
(51) Int. Cl.: G02B 5/09, B21C 23/00, F21V 7/04, F21V 7/22, F24J 2/10, B21C 23/06, B21C 23/14, F24J 2/07, F24J 2/16, F24J 2/52, F21V 7/09, F24J 2/46

(54) **FRESNEL-SPIEGEL**
FRESNEL MIRROR
MIROIR DE FRESNEL

(30) Priorität: 17.12.2007 DE 102007061153
(43) Veröffentlichungstag der Anmeldung: 01.09.2010
(73) Patentinhaber: Erbslöh Aluminium GmbH, 42553 Velbert (DE)
(72) Erfinder: RICKS, Karl, 47803 Krefeld (DE); FAUSTEN, Bernd, 42549 Velbert (DE)
(74) Vertreter: Buse, Mentzel, Ludewig Patentanwaltskanzlei
(86) Internationale Anmeldenummer: PCT/EP2008/010469
(87) Internationale Veröffentlichungsnummer: WO 2009/077112

(56) Entgegenhaltungen:
- DE-U1- 8 622 427
- JP-A- 57 122 401
- US-A- 3 058 394
- US-A- 3 982 527
- US-A- 4 222 368
- US-A- 4 301 321

## Beschreibung

Die Erfindung betrifft einen Fresnel-Spiegel zur gerichteten Reflexion von Licht, insbesondere von Sonnenlicht und/oder zur Lenkung von Kunstlicht in Beleuchtungssystemen, sowie ein Verfahren zur Herstellung eines solchen Fresnel-Spiegels.

Bekannt ist eine Fresnel-Linse, die einen stufenförmigen Querschnitt aufweist und ursprünglich für Leuchttürme entwickelt wurde. Die Fresnel-Stufenlinse ermöglicht die Konstruktion großer Linsen mit kurzen Brennweiten, ohne das Gewicht und Volumen herkömmlicher Linsen, da billige Fresnel-Linsen auch aus Kunststoff hergestellt werden können. Typische Probleme von Kunststofflinsen sind Leistungsverluste durch Umwelteinflüsse und mechanische Beschädigungen aufgrund von Durchbiegungen sowie durch Temperaturbeanspruchung.

Die Anwendung des Fresnel-Prinzips ist auch aus der DE 102 48 064 bekannt. In dieser Offenlegungsschrift wird ein Solarturmkraftwerk gezeigt. Das Sonnenlicht wird durch ein Heliostatenfeld reflektiert und in einem Turmabsorber konzentriert und absorbiert. Das Heliostatenfeld besteht aus mehreren einzelnen Spiegeln, die nach dem Fresnel-Prinzip aufgestellt sind. Dieses Heliostatenfeld reflektiert das Sonnenlicht unabhängig von der Änderung der Sonnenposition am Himmel immer auf den gleichen ortsfesten Punkt. Nachteilig ist der Leistungsverlust durch die lange Brennweite.

In dem amerikanischen Patent US 4 131 336 ist des Weiteren ein großer linearer Reflektor zur Gewinnung von Solarenergie gezeigt. Die Fresnel-Struktur ist hier in einem geformten und stabilisierten Erdboden eingebracht und die Reflexion wird über auf den Erdboden aufgebrachte, mit Aluminium beschichtete Polymerfolien ermöglicht. Nachteilig bei dieser Fresnel-Struktur ist der hohe Leistungsverlust aufgrund des hohen Anteils an ungerichteter Reflexion.

Nachteilig bei den vorgenannten Anwendungen sind der große Aufwand und die Baugrößen zur Erzielung der reflektierenden Struktur, was eine breite Anwendung verhindert.

Aufgabe der vorliegenden Erfindung ist es daher, eine einfache Fresnel-Struktur zur Verfügung zu stellen, die leicht und automatisiert herstellbar ist und zur breiten Anwendung bei der Nutzung von Solarenergie oder als Reflektor in der Beleuchtungsindustrie eingesetzt werden kann.

Diese Aufgabe wird mit einem Fresnel-Spiegel mit den Merkmalen des Anspruchs 1 gelöst.

Bei dem erfindungsgemäßen Fresnel-Spiegel zur gerichteten Reflexion von Licht handelt es sich um ein im wesentlichen flaches Trägerteil im Gegensatz zu bekannten Parabolspiegeln. Dieses Trägerteil besitzt an seiner Oberseite eine Fresnel-Struktur und die einzelnen Stufen der Fresnel-Struktur weisen eine reflektierende Oberfläche als Wirkfläche auf.

Das Trägerteil als Basisteil des Fresnel-Spiegels ist bei einer Ausführungsvariante mit einem weiteren Bauteil, welches als Fresnel-Struktur geformt ist, fest verbunden oder aber das Trägerteil als Basisteil ist bei einer weiteren Ausführungsform einstückig mit der Fresnel-Struktur ausgebildet. Im letzteren Fall bestehen also das Trägerteil und die Fresnel-Struktur aus ein und demselben Werkstoff bzw. Werkstück, wobei die Fresnel-Struktur vorzugsweise in das Basisteil eingeformt ist.

Das Trägerteil besteht aus Metall, Kunststoff oder einem anderen geeigneten Werkstoff. Ein Trägerteil aus Kunststoff oder Metall, welches durch Spritzgießen hergestellt wird, kann bei der Herstellung leicht mit einer Fresnel-Struktur versehen werden. Ein solchermaßen gefertigtes Trägerteil mit der eingeformten Fresnel-Struktur muss jedoch mit einer reflektierenden Oberfläche versehen werden, beispielsweise durch Beschichten der Stufen der Fresnel-Struktur mit einer Silberschicht, mit einer hochreinen Aluminiumschicht oder einer anderen geeigneten Beschichtung.

Bei einer weiteren Ausführungsform besteht das Trägerteil des Fresnel-Spiegels aus Metallblech. In das Trägerteil aus Metall lässt sich durch Umformen eine Fresnel-Struktur einbringen. Bei einer bevorzugten Ausführungsform wird für das Metallträgerteil ein Edelstahl- oder Aluminiumblech verwendet. Das Einbringen der Fresnel-Struktur kann in diesem Fall in einfacher Weise durch Dessinieren, Prägen, Walzen, Tiefziehen, Hydroformen bzw. Floatformen erfolgen.

Bei der erfindungsgemäßen Ausführungsform besteht das Trägerteil des Fresnel-Spiegels ebenfalls aus Aluminium oder einer AluminiumLegierung und wird durch Strangpressen hergestellt. Beim Strangpressen des Trägerteils wird gleichzeitig auch die Fresnel-Struktur geformt.

Besitzt das Metall des Trägerteils und damit die Fresnel-Struktur bereits eine hohe Reflexion, so kann auf eine zusätzliche Beschichtung der als Wirkfläche dienenden Stufen der Fresnel-Struktur verzichtet werden. Anderenfalls kann zusätzlich auf die Stufen der Fresnel-Struktur eine hochreflektierende Schicht aufgebracht werden.

Je nach Anwendungsfall, beispielsweise bei einem Einsatz des Fresnel-Spiegels im Außenbereich, wo der Fresnel-Spiegel Witterungseinflüssen ausgesetzt ist, wird die als Wirkfläche fungierende reflektierende Oberfläche der Fresnel-Struktur zusätzlich mit einer witterungsbeständigen Schutzschicht versehen. Eine solche Schutzschicht kann eine geeignete, dünne, durchsichtige Lackschicht sein. Bei der Verwendung von Aluminium zur Herstellung des Fresnel-Spiegels, insbesondere aus einer Aluminiumlegierung mit sehr hohem Aluminiumanteil, die eine ausreichende Reflexion für die reflektierende Oberfläche der Fresnel-Struktur besitzt, kann die witterungsbeständige Schutzschicht durch Anodisieren und Verdichten des Aluminiummaterials erzielt werden.

Wie bei bekannten Sonnenlichtabsorbern lässt sich ein solcher gegebenenfalls mit Nachführungssystemen ausgestatteter Fresnel-Spiegel dazu einsetzen, das Sonnenlicht auf einen ortsfesten Punkt oder eine Linie zu reflektieren. In dem Fall, wo eine Reflektion auf einen ortsfesten Punkt erfolgt, weist die Fresnel-Struktur des Fresnel-Spiegels ringförmige Stufen auf, die eine konzentrische Struktur ergeben. An dem ortsfesten Punkt, an dem die vom Fresnel-Spiegel reflektierten Sonnenlichtstrahlen zusammentreffen, kann zum Aufbau eines Solarkollektors eine Solarzelle angeordnet werden. Diese Solarzelle wandelt die aus dem Sonnenlicht gewonnene Strahlungsenergie direkt in elektrische Energie um und leitet diese Energie zur Nutzung an entsprechende Verbraucher weiter. Eine alternative Ausführungsform des Fresnel-Spiegels besitzt quadratische, welche ebenfalls konzentrisch angeordnet sind und das Sonnenlicht auf einen ortsfesten Punkt (Fokus) hin reflektieren. Eine alternative Ausführungsform des Fresnel-Spiegels besitzt rechteckige Stufen. Die quadratische und rechteckige Ausführungsform hat den Vorteil, dass eine bessere Materialausnutzung stattfindet und damit der bei der Herstellung des Fresnel-Spiegels anfallende Abfall reduziert wird. Ebenfalls ist eine Effizienzsteigerung durch die Anpassung des rechteckigen Fokus an die Geometrie der Solarzelle möglich. Eine metallische konzentrische Fresnel-Struktur wird bevorzugt aus einem Metallblech gebildet. Möglich ist es auch eine konzentrische Struktur aus mehreren Abschnitten eines Metallbleches oder mehreren Abschnitten eines Strangpressprofils zusammen zu setzen. In diesem Fall können insbesondere auch größer dimensionierte Fresnel-Spiegel gebildet werden.

In der erfindungsgemäßen Ausführungsform eines Fresnel-Spiegels wird das Sonnenlicht auf eine ortsfeste Linie reflektiert. In diesem Fall weist die Fresnel-Struktur parallel zueinander ausgerichtete Stufen auf. Ein solcher Fresnel-Spiegel reflektiert das Sonnenlicht beispielsweise auf eine Linie, an der sich ein Absorberrohr befinden kann, das die Energie des Sonnenlichtes in Wärmeenergie, beispielsweise zur Dampferzeugung, umwandelt. An der vorgenannten Linie können auch Solarzellen zur Energiegewinnung aneinander gereiht vorgesehen werden. Ein Fresnel-Spiegel mit einer metallischen Fresnel-Struktur mit parallel ausgerichteten Stufen wird bevorzugt aus einem Strangpressteil gebildet. Er kann auch aus mehreren miteinander verbundenen Strangpressprofilen bestehen, wobei beim Strangpressen in vorteilhafter Weise gleichzeitig die Verbindungsmittel an den Profilen erzeugt werden.

Die vorbeschriebenen Fresnel-Spiegel lassen sich über verschiedene Verfahren herstellen. Ist das Trägerteil des Fresnel-Spiegels aus einem Metallmaterial, insbesondere einem Stahl- oder einem Aluminiumblech, so werden zwei alternative Verfahren zur Herstellung vorgeschlagen.

Bei einem möglichen Verfahren wird das aufgewickelte Metallblech in Blechplatinen zugeschnitten, die die entsprechende Größe und Form des gewünschten Fresnel-Spiegels aufweisen. Bedarfsweise kann eine etwas größere Form gewählt werden und der Überstand nach dem Umformen entfernt oder für Befestigungsteile vorgesehen werden. Die zugeschnittene, als Trägerteil dienende Blechplatine wird in eine Umformvorrichtung zwischen zwei Werkzeughälften eingelegt, wobei die eine Werkzeughälfte eine Negativform der gewünschten Fresnel-Struktur aufweist. Durch den Umformvorgang wird die Fresnel-Struktur in die Blechplatine eingeformt. Bei einem solchen Umformen kann es sich um Prägen, um Floatforming, Tiefziehen oder ein anderes Hydroformingverfahren handeln. Bei großen Umformvorrichtungen oder kleinen Fresnel-Spiegeln kann die Werkzeughälfte auch mehr als eine Negativform der Fresnel-Struktur aufweisen, so dass gleichzeitig mehrere Blechplatinen mit je einer Fresnel-Struktur versehen werden. In diesem Fall wird vorzugsweise eine große Blechplatine in die Umformvorrichtung eingelegt und nach dem Umformen die Blechplatine aufgeteilt und zugeschnitten, so dass die einzelnen Fresnel-Spiegel entstehen.

Zur Herstellung größerer Fresnel-Spiegel können die Wirkflächen auch segmentiert und aus mehreren Teilflächen zusammengesetzt werden.

Bei einer alternativen Verfahrensweise wird das Metallblech direkt vom Coil in eine Dessinwalzvorrichtung eingeführt. Die Dessinwalze besitzt zur Erzeugung der Fresnel-Struktur mindestens eine Negativform der gewünschten Fresnel-Struktur. Es können jedoch auch benachbart, sowohl nebeneinander als auch hintereinander, mehrere Fresnel-Strukturen auf der Dessinwalze vorgesehen sein. Besondere Vorteile hat ein solches Umformverfahren auch, wenn Fresnel-Spiegel erzeugt werden, die parallel zueinander ausgerichtete Stufen aufweisen, um das Sonnenlicht auf eine ortsfeste Linie zu reflektieren. Das Einformen der Fresnel-Struktur in die als Trägerteil dienende Blechplatine erfolgt während des Dessinwalzens, anschließend wird das dessinierte Blechband auf die entsprechende Größe und Form des gewünschten Fresnel-Spiegels zugeschnitten. Bei diesem Verfahren ist das Metallblech vorzugsweise ein Aluminiumblech.

Eine weitere alternative und vorteilhafte Verfahrensweise zur Herstellung eines Fresnel-Spiegels erfolgt durch Strangpressen. Ein Metallbarren, insbesondere aus Aluminium oder einer Aluminium-Legierung, wird in der Strangpresse zu einem Profilstrang umgeformt. Nachfolgend erfolgt - wie auch für andere Profilgeometrien bekannt - ein Abschrecken und Recken des Profilstranges, wobei der Abschreckvorgang abhängig ist von der eingesetzten Legierung. Von diesem Profilstrang werden entsprechend der Länge des gewünschten Fresnel-Spiegels gewünschte Teillängen abgetrennt. Der beim Strangpressen entstehende Profilquerschnitt des Profilstranges umfasst das Trägerteil mit der Fresnel-Struktur auf einer Breitseite, der Oberseite, des Trägerteiles. Vorteilhafter Weise können gleichzeitig während des Strangpressens des Trägerteils Verbindungselemente, Verstärkungen und Montageelemente als Teile des Gesamtprofils erzeugt werden. Bei einer besonderen Ausführungsform werden an den Schmalseiten des Trägerteiles Verbindungselemente vorgesehen, die eine formschlüssige Verbindung der Profile mit Fresnel-Struktur untereinander und/oder mit anderen Bauteilen ermöglichen. Auf diese Weise ist eine Vergrößerung der wirksamen Fläche eines Fresnel-Spiegels möglich. Ebenso können die Profile auch mit einem Zentralprofil verbunden werden, welches beispielsweise ein Kollektorrohr umfasst, das in der Brennlinie der zu einem Fresnel-Spiegel zusammengesetzten Profile liegt.

In dem Fall, wo ein Blech aus hochreflektierendem Edelstahl bzw. aus Aluminium und/oder aus einer Aluminiumlegierung mit sehr hohen Aluminiumanteilen verwendet wird, , braucht keine zusätzlich reflektierende Schicht auf die Fresnel-Struktur aufgebracht werden. Zur Erzeugung einer hochglänzenden, hochreflektierenden Oberfläche wird dazu bei einer bevorzugten Ausführungsform das Metallblech vor dem Umformen gereinigt, entfettet und/oder gebeizt. Des Weiteren kann vor dem Umformen oder nach dem Umformen ein Polierverfahren und/oder ein Glänzverfahren bei einem Aluminiumlegierungsblech vorgesehen werden. Die empfindliche Aluminiumschicht wird durch Anodisieren und Verdichten geschützt. Beim Verdichten kann es sich um Kalt- und/oder Heißverdichten handeln. Das gleiche Behandlungsverfahren ist auch auf Fresnel-Spiegel aus einem Strangpressprofil aus Aluminium oder einer Aluminium-Legierung anwendbar.

Wird bei den vorgenannten Verfahren ein Metallblech mit nicht ausreichender Reflexionsfähigkeit eingesetzt, so kann nach dem Umformen zusätzlich eine hochreflektierende Schicht aufgebracht werden. Bei einer solchen Schicht handelt es sich vorzugsweise um Silber oder um eine Schicht aus einem hochreinen Aluminium. Eine solche zusätzliche Schicht kann auch bei einem Fresnel-Spiegel vorgesehen werden, dessen Trägerteil aus einem Spritzgussteil aus Kunststoff oder Metall besteht. In diesem Fall wird das Trägerteil zusammen mit der Fresnel-Struktur einstückig in einer Spritzgussvorrichtung hergestellt und anschließend die Stufen der Fresnel-Struktur mit der hochreflektierenden Schicht beschichtet.

Abhängig vom Anwendungsfall kann die Oberfläche des Fresnel-Spiegels zusätzlich mit einer witterungsbeständigen Schutzschicht versehen werden. Diese witterungs-beständige Schutzschicht muss jedoch durchsichtig sein und sollte eine geringe Dicke aufweisen.

Durch alle vorgenannten alternativen Verfahren ist ein Fresnel-Spiegel leicht und automatisiert herstellbar und eignet sich somit zur breiten Anwendung bei der Nutzung von Solarenergie.

Weitere Einzelheiten der Erfindung sind der folgenden Beschreibung von Ausführungsbeispielen der Erfindung anhand von Zeichnungen zu entnehmen. Es zeigen:
- Fig. 1a: eine Draufsicht auf einen Fresnel-Spiegel;
- Fig.: 1b eine Schnittdarstellung des Fresnel-Spiegels gemäß Fig. 1a;
- Fig. 2a: eine Draufsicht auf einen weiteren Fresnel-Spiegel;
- Fig. 2b: eine Draufsicht auf einen weiteren Fresnel-Spiegel;
- Fig. 3: perspektivische Ansicht eines weiteren Fresnel-Spiegels;
- Fig. 4: Ausschnitt aus einer erfindungsgemäßen Kollektoreinheit in Schnittdarstellung.

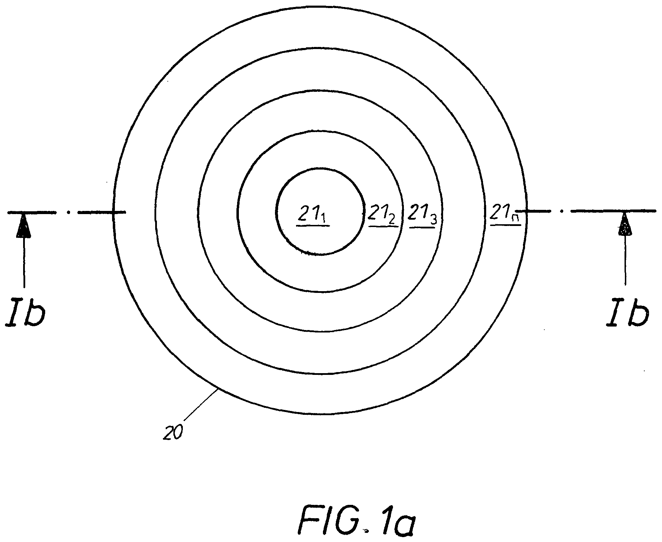

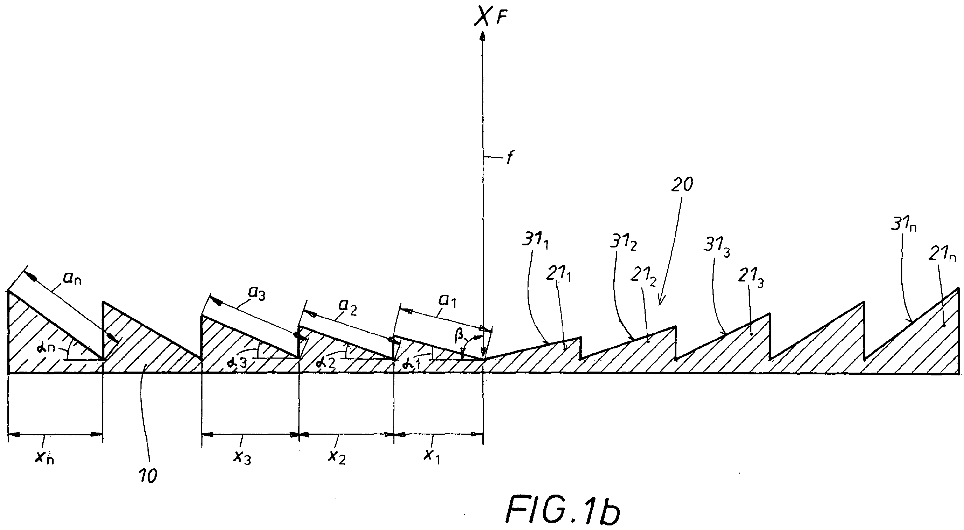

Fig. 1a und 1b zeigen einen kreisförmigen Fresnel-Spiegel mit einem runden, flachen Trägerteil 10. An der Oberseite des Trägerteils 10 ist eine Fresnel-Struktur 20 angeordnet. Der Anstellwinkel β des Trägerteils 10 beträgt bei dieser Ausführung 90°. Dieser Anstellwinkel β kann auch kleiner als 90° sein. In diesem Fall wäre das Trägerteil 10 zur gedachten Lotrechten zwischen Fokus F und Mittelpunkt des Trägerteils 10 geneigt.

Die Fresnel-Struktur 20 besitzt ringförmige, um einen Mittelpunkt angeordnete konzentrische Stufen 21₁, 21₂, 21₃ bis 21ₙ. Das Trägerteil 10 mit der Fresnel-Struktur 20 besteht aus einem hochreinen Aluminiumwerkstoff und ist aus einem Aluminiumblech durch Dessinwalzen hergestellt worden. Die Oberflächen der einzelnen Stufen 21₁, 21₂, 21₃ bis 21ₙ stellen die Wirkflächen 31₁, 31₂, 31₃ bis 31ₙ des Fresnel-Spiegels dar. Da dieser Fresnel-Spiegel aus einem hochreinen Aluminium besteht, ist eine zusätzliche hochreflektierende Beschichtung der Wirkflächen 31₁, 31₂, 31₃ bis 31ₙ nicht notwendig. Wie der Fig. 1b zu entnehmen ist, werden Sonnenstrahlen - nicht gezeigt - die auf diesen Fresnel-Spiegel fallen von den Wirkflächen 31₁, 31₂, 31₃ bis 31ₙ auf einen Punkt reflektiert, dem Fokus F, der sich in einer Brennweite f vom Mittelpunkt der konzentrischen Fresnel-Struktur 20 entfernt befindet. Zur Energiegewinnung aus Sonnenlicht kann in diesem Punkt F eine Solarzelle angeordnet werden. Durch eine geeignete Wahl der Winkel α₁, α₂, α₃ bis αₙ der Wirkflächen 31₁, 31₂, 31₃ bis 31ₙ kann auch ein außenmittiger Fokus erreicht werden.

Die Breite der Stufen x₁, x₂, x₃ bis xₙ ist bei dem in Fig. 1a und 1b gezeigten Fresnel-Spiegel gleich groß. Die Breite x₁, x₂, x₃ bis xₙ der Stufen 21₁, 21₂, 21₃ bis 21ₙ kann jedoch auch unterschiedlich groß gewählt werden. Wesentlicher ist, dass der Anstellwinkel α₁, α₂, α₃ bis αₙ der Wirkflächen 31₁, 31₂, 31₃ bis 31ₙ sich vom Mittelpunkt der Fresnel-Struktur 20 nach außen hin vergrößert, d.h. der Anstellwinkel α₁ ist der kleinste Winkel, der Anstellwinkel αₙ ist der größte Winkel. Dies bedeutet, dass die Stufe 21₁ eine Wirkfläche 31₁ hat, die bedeutend flacher ausgerichtet ist, als die Wirkfläche 31ₙ der Stufe 21ₙ. Damit ist auch die Breite aₙ der äußeren Stufe 31ₙ größer als die Breite a₁ der inneren ringförmigen Stufe 31₁. Die Wirkflächen 31₁, 31₂, 31₃ bis 31ₙ sind in dem Beispielen als ebene Flächen dargestellt. Sie können auch konkav gewölbt sein.

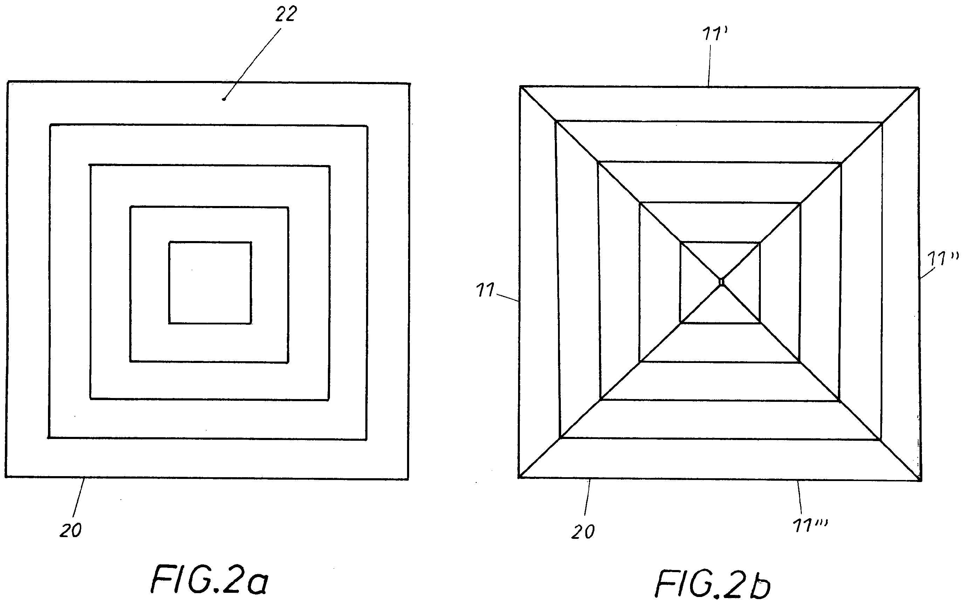

Die Fig. 2a und 2b zeigen ebenfalls einen Fresnel-Spiegel, der die Sonnenstrahlen auf einen Fokus F konzentriert. Ein Schnitt durch den Fresnel-Spiegel gemäß Fig. 2a bzw. 2b ist vergleichbar mit der Schnittdarstellung in Fig. 1b. Die Fresnel-Spiegel in den Fig. 2a und 2b sind jedoch quadratisch, d.h. alle Stufen 22 dieser Fresnel-Struktur 20 haben eine quadratische Umfangslinie. Es ist auch eine Ausgestaltung der Fresnel-Struktur mit rechteckigen Stufen möglich.

In der Fig. 2a ist ein Fresnel-Spiegel gezeigt, bei dem die Fresnel-Struktur 20, ähnlich wie bei der Ausführungsform gemäß Fig. 1a, an der Oberseite des Trägerteils 10 eingeformt ist, nämlich durch Dessinwalzen eines Aluminiumbleches. Die gleiche Struktur erhält man, wenn man vier Blechabschnitte 11, 11', 11", 11"' zu einem Fresnel-Spiegel zusammensetzt, wie in Fig. 2b gezeigt. In gleicher Weise können anstatt der Blechabschnitte 11, 11', 11", 11"' auch stranggepresste Profilabschnitte zu einem quadratischen Fresnel-Spiegel zusammengesetzt werden. Auf diese Weise kann die Baugröße eines Fresnel-Spiegels vergrößert werden, ohne dass größere Umformvorrichtungen bei der Herstellung notwendig sind.

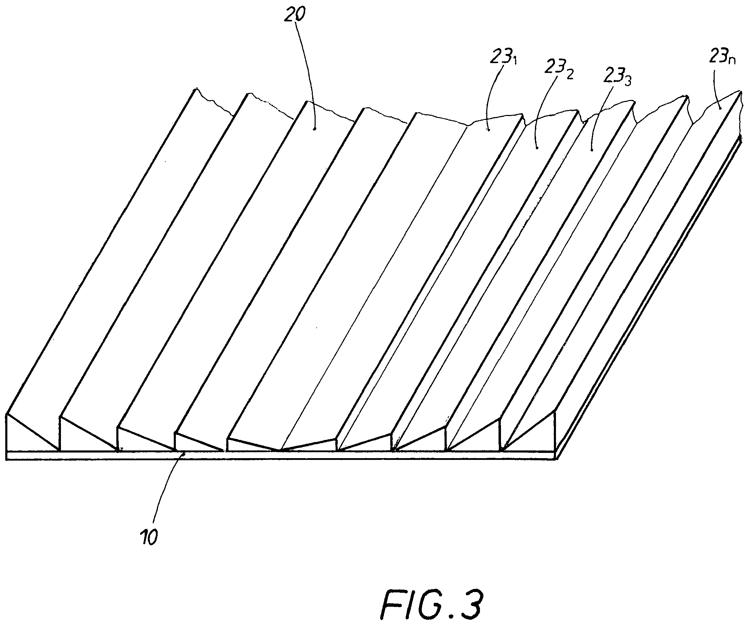

In der Fig. 3 wird ein Fresnel-Spiegel mit einer rechteckigen Grundfläche des Trägerteils 10 gezeigt. An der Oberseite des Trägerteils 10 befindet sich die Fresnel-Struktur 20, die parallel zueinander ausgerichtete Stufen 23₁, 23₂, 23₃ bis 23ₙ besitzt. Ein Querschnitt durch diesen Fresnel-Spiegel ähnelt der Schnittdarstellung in Fig. 1b. Im Abstand f, also im Abstand der Brennweite, befindet sich, in diesem Fall von der Mittellinie des Fresnel-Spiegels entfernt, also eine Fokuslinie. Entlang dieser Fokuslinie können Solarzellen zur Energiegewinnung vorgesehen oder aber ein Absorberrohr angeordnet werden. Der in Fig. 3 gezeigte Fresnel-Spiegel ist aus einem Aluminiumblech durch Dessinwalzen gefertigt worden.

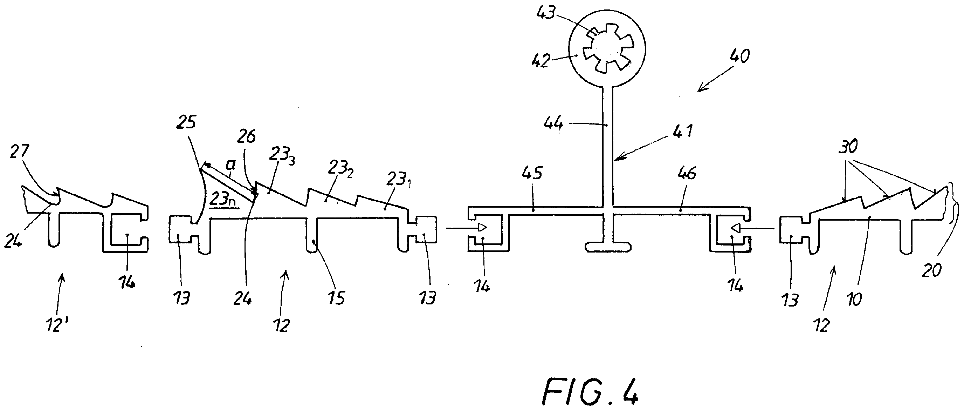

Fig. 4 zeigt eine Kollektoreinheit 40 mit einem Zentralprofil 41. Beidseitig von diesem Zentralprofil 41 sind jeweils in symmetrischer Anordnung Profile 12, 12' vorgesehen. Diese Profile 12, 12' ergänzen sich in ihrer zusammengesetzten Form zu einem Fresnel-Spiegel. Die Profile 12, 12' sind durch Strangpressen erzeugt worden. An dem flachen Trägerteil 10 der zusammengesetzten Profile 12, 12' ist auf der Oberseite eine Fresnel-Struktur 20 vorhanden. Diese Profile 12, 12' sind als Vollprofile gepresst. Es ist zur Materialeinsparung auch möglich diese als Hohlprofile auszugestalten, so dass zwischen dem Trägerteil 10 und den Wirkflächen 30 der Stufen der Fresnel-Struktur 20 Hohlräume vorgesehen werden. An der Unterseite des Trägerteils 10 sind Verstärkungsstege 15 angeformt, die dem Fresnel-Spiegel eine ausreichende Stabilität geben und auch als Montageelemente dienen können. Des Weiteren sind beim Strangpressen an den Schmalseiten des Trägerteils 10 Verbindungsmittel 13, 14 angeformt. In diesem Fall besitzt das Profil 12 Verbindungsmittel 13, die die Form eines Nutsteins aufweisen, der in eine entsprechende hinterschnittene Nut 14 des Profils 12' formschlüssig eingreifen kann. Eine solche formschlüssige Verbindung 13, 14 ist auch zum Zentralprofil 41 vorgesehen, so dass sich die Teile der Kollektoreinheit 40 in einfacher Weise zusammenfügen lassen.

Die Stufen 23₁, 23₂, 23₃ bis 23ₙ der Profile 12, 12' weisen die gleiche Breite auf und mit steigender Entfernung vom Zentralprofil 41 einen ansteigenden Anstellwinkel, vergleichbar mit der Schnittdarstellung in Fig. 1b. Es wäre auch eine Ausgestaltung mit veränderlicher Breite und/oder Höhe der Stufen möglich. Damit die Wirkflächen 30 in ihrer Breite a vollständig ausgenutzt werden, wird bei den Profilen 12 und 12' an der Rückseite jeder Stufe 23₁, 23₂, 23₃ bis 23ₙ ein Hinterschnitt 26 bzw. 27 vorgesehen. Der gezeigte Hinterschnitt 26 bei den Stufen des Profils 12 stellt eine konkave Einbauchung dar. Der Hinterschnitt 27 beim Profil 12' ist ebenfalls eine konkave Einbauchung, in diesem Fall ist die Einbauchung in Höhe des Stufenanfanges 24 besonders stark. Durch das Vorsehen dieser Hinterschnitte 26, 27 auf den Rückseiten der Stufen 23₁, 23₂, 23₃ bis 23ₙ der Profile 12, 12' wird beim Herstellen durch Strangpressen verhindert, dass durch Grate oder erforderliche Mindestradien beim Strangpressen im Bereich des Stufenanfanges 24 oder des Stufenendes 25 die Wirkflächen 30 verkleinert werden.

Die von dem durch die Profile 12, 12' gebildeten Fresnel-Spiegel reflektierten Sonnenstrahlen treffen auf eine Fokuslinie. Entlang dieser Fokuslinie ist in diesem Ausführungsbeispiel ein Kollektorrohr 42 vorgesehen. Dieses Kollektorrohr 42 besitzt einen Innenraum 43, der beispielsweise von Wasser oder einem anderen Medium durchflossen wird. Die von dem Fresnel-Spiegel reflektierten Sonnenstrahlen erwärmen das Kollektorrohr 42 und damit auch die durchfließende Medium. Für einen besseren Wärmeübergang ist dieses Kollektorrohr 42 an seiner Außenseite dunkel eingefärbt, beispielsweise durch Lackieren oder durch Pulverbeschichten. In gleicher Weise tragen die nach innen weisenden Rippen des Kollektorrohres 42 zu einer besseren Wärmeübertragung bei. Dieses Kollektorrohr 42 ist Teil des Zentralprofils 41 und befindet sich in diesem Beispiel am oberen Ende eines Tragsteges 44. Bei der Anbindung des Kollektorrohres 42 ist ein möglichst geringer Wärmeübergang in die benachbarte Struktur anzustreben. Das Kollektorrohr 42 kann auch als separates Bauteil ausgeführt werden. Auch kann der Tragsteg 44 aus einem schlecht wärmeleitenden Material vorgesehen sein oder mittels eines aus schlecht wärmeleitenden Material hergestellten Verbindungselement mit dem Kollektorrohr 42 verbunden.

Von diesem Tragsteg 44 ragen im unteren Bereich seitlich zwei Seitenstege 45, 46 ab. Endseitig an den Seitenstegen 45, 46 sind Verbindungsmittel 14 vorgesehen für den Anschluss der Profile 12, 12'. Bei weiteren nicht gezeigten Ausführungen können auch die Seitenstege 45, 46 mit Wirkflächen für die Fresnel-Struktur ausgestaltet sein.

Die Erfindung ist nicht auf die gezeigten Ausführungsbeispiele beschränkt. Es sind vielmehr weitere Ausführungsformen eines erfindungsgemäßen Fresnel-Spiegels denkbar, der kombiniert mit Solarzellen zur Gewinnung von elektrischer Energie oder in Verbindung mit Kollektorrohren zur Wärmeenergiegewinnung kombiniert werden kann. In den Ausführungsbeispielen wurden die Fresnel-Spiegel aus durch Dessinwalzen geformten Aluminiumblech oder Aluminium-Strangpressprofilen einstückig oder als Segmente des Fresnel-Spiegels hergestellt. Es ist jedoch auch denkbar die Fresnel-Struktur separat zu fertigen und mit einem Trägerteil zu verbinden.

### Bezugszeichenliste:

- 10: Trägerteil
- 11,11',11",11"': Blechabschnitt
- 12,12': Profil
- 13, 14: Verbindungsmittel
- 15: Verstärkungssteg
- 20: Fresnel-Struktur
- 21₁,21₂,21₃,21ₙ: Stufe einer konzentrischen Fresnel-Struktur
- 22: Stufe einer quadratischen Fresnel-Struktur
- 23₁,23₂,23₃,23ₙ: Stufe einer rechteckigen Fresnel-Struktur
- 24: Stufenanfang
- 25: Stufenende
- 26: Hinterschnitt
- 27: Hinterschnitt
- 30: Wirkfläche
- 31₁,31₂,31₃,31ₙ: Wirkfläche der Stufen 21₁,21₂,21₃,21ₙ
- 40: Kollektoreinheit
- 41: Zentralprofil
- 42: Kollektorrohr
- 43: Innenraum
- 44: Tragsteg
- 45, 46: Seitensteg

- a,a₁,a₂,a₃,aₙ: Breite der Wirkfläche von 21₁,21₂,21₃,21ₙ
- x₁,x₂,x₃,xₙ: Breite der Stufe 21₁,21₂,21₃,21ₙ
- α₁, α₂, α₃, αₙ: Anstellwinkel der Wirkflächen 31₁,31₂,31₃,31ₙ
- β: Anstellwinkel des Trägerteils 10
- f: Brennweite
- F: Fokus

## Patentansprüche

1. Fresnel-Spiegel aus einem flachem Trägerteil (10), welches an seiner Oberseite eine Fresnel-Struktur (20) besitzt, wobei zur gerichteten Reflexion von Sonnenlicht auf einen Fokuspunkt oder auf eine Fokuslinie die einzelnen Stufen (21; 22; 23) dieser Fresnel-Struktur (20) eine reflektierende, ebene Oberfläche als Wirkfläche (30) aufweisen,
wobei diese eine Fresnel-Struktur (20) aus mehreren durch Strangpressen erzeugten Profilen (12, 12', 12") aus Aluminium oder einer Aluminium-Legierung zusammengesetzt ist,
**dadurch gekennzeichnet,**
**dass** an den Profilen (12, 12', 12") Verbindungsmittel (13, 14) angeformt sind, die der formschlüssigen Verbindung der Profile (12, 12', 12") untereinander dienen und sich die Profile (12, 12', 12") in ihrer zusammengesetzten Form zu der einer Fresnel-Struktur (20) ergänzen,
**dass** diese eine Fresnel-Struktur (20), so aus den Profilen (12, 12', 12") zusammengesetzt ist, dass sich eine gerichtete Reflexion von Sonnenlicht auf eine gemeinsame Fokuslinie (42) ergibt.

2. Fresnel-Spiegel nach Anspruch 1, wobei die an den Profilen (12, 12', 12") angeformten Verbindungsmittel (13, 14) zusätzlich zur Verbindung mit weiteren Bauteilen dienen.

3. Fresnel-Spiegel nach Anspruch 1, wobei das Trägerteil (10) als Basisteil und die Fresnel-Struktur (20) aus einem Werkstoff bestehen, wobei die Fresnel-Struktur (20) in das Basisteil eingeformt ist und die Wirkfläche (30) der Fresnel-Struktur (20) durch das Metall des Trägerteils (10) gebildet wird.

4. Fresnel-Spiegel nach einem der Ansprüche 1 bis 3 wobei der Fresnel-Spiegel zur Reflexion des Sonnenlichtes auf eine ortsfeste Linie die Fresnel-Struktur (20) parallel zueinander ausgerichtete Stufen (23₁,23₂,23₃,23ₙ) aufweist.

5. Kollektoreinheit (40) umfassend Fresnel-Spiegel gemäß einem oder mehreren der Ansprüche 1 bis 4 und ein Zentralprofil (41), wobei das Zentralprofil (41) zumindest ein entlang der Fokuslinie des Fresnel-Spiegels angeordnetes Kollektorrohr (42) enthält, welches am oberen Ende eines aufrecht stehenden Tragstegs (44) vorgesehen ist, wobei vom unteren Ende des Tragstegs (44) beidseitig Seitenstege (45, 46) abragen und die Seitenstege (45, 46) Verbindungsmittel (14) besitzen, die mit Verbindungsmitteln (13) von Blechabschnitten (11, 11', 11", 11''') oder von Profilen (12, 12', 12") der Fresnel-Struktur (20) des Fresnel-Spiegels zur Verbindungsbildung zusammenwirken.

## Claims

1. Fresnel mirror made from a flat supporting part (10) which has a Fresnel structure (20) on its top, whereby, for directed reflection of sunlight onto a focal point or onto a focus line, the individual steps (21; 22; 23) of this Fresnel structure (20) features a reflecting, level surface as effective surface (30),
whereby, this Fresnel structure (20), made from multiple sections (12, 12', 12") generated by extrusion, is composed of aluminium or an aluminium alloy,
**characterized in that**,
means of connection (13, 14) are formed on the sections (12, 12', 12") which are used for positive interlocking of the sections (12, 12', 12") and that, in their composed form, the sections (12, 12', 12") supplement the Fresnel structure (20), such that this composes a Fresnel structure (20) from the sections (12, 12', 12") so that the result is a directed reflection of sunlight onto a common focus line (42).

2. Fresnel mirror in accordance with claim 1, whereby, the formed means of connection (13, 14) to the sections (12, 12', 12") is additionally used to connect to other components.

3. Fresnel mirror in accordance with claim 1, whereby, the supporting part (10) comprises of a base part and the Fresnel structure (20) made from a material, whereby, the Fresnel structure (20) is integrally formed in the base part and the effective surface (30) of the Fresnel structure (20) is formed by the metal of the supporting part (10).

4. Fresnel mirror in accordance with one of the claims 1 to 3 whereby, the Fresnel mirror for reflection of the sunlight onto a stationary line of the Fresnel structure (20) features steps (23₁,23₂,23₃,23ₙ,) aligned parallel to one another,

5. collector unit (40) embracing Fresnel mirrors in accordance with one or more of the claims 1 to 4 and a central section (41), whereby, the central section (41) has a minimum of one collector tube (42) which, at the top end, is provided with an upright supporting bar (44) arranged along the focus line of the Fresnel mirror, whereby, from the bottom end of the supporting bar (44), side bars (45, 46) protrude and the side bars (45, 46) have means of connection (14) which interlock with the means of connecting (13) the plate sections (11, 11', 11", 11"') or for forming joints of sections (12, 12', 12") of the Fresnel structure (20) of the Fresnel mirror.

## Revendications

1. Miroir de Fresnel composé d'une pièce porteuse (10) plate qui sur son côté supérieur possède une structure de Fresnel (20), sachant que pour réfléchir dans une direction précise la lumière solaire vers un point focal ou vers une ligne focale, les différentes « dents » (21; 22; 23) de cette structure de Fresnel (20) présentent une surface plane réfléchissante plate officiant de surface active (30),
sachant que cette structure de Fresnel (20) se compose de plusieurs profilés (12, 12', 12") en aluminium ou en un alliage d'aluminium obtenus par extrusion à la presse,
**caractérisée en ce que**
contre les profilés (12, 12', 12") ont été moulés des moyens de liaison (13, 14) qui servent à la jonction des profilés (12, 12', 12") entre eux par adhérence de formes, et **en ce que** les profilés (12, 12', 12") sous leur forme assemblée se complètent pour former une structure de Fresnel (20), **en ce que** cette structure de Fresnel (20) est composée des profilés (12, 12', 12") de sorte qu'il en résulte une réflexion ciblée du soleil en direction d'une ligne focale (42) conjointe.

2. Miroir de Fresnel selon la revendication 1, sachant que des moyens de liaison (13, 14) moulés contre les profilés (12, 12', 12") servent en plus à établir la liaison avec d'autres composants.

3. Miroir de Fresnel selon la revendication 1, sachant que la pièce porteuse (10) en tant que pièce base et la structure de Fresnel (20) se composent d'un matériau, sachant que la structure de Fresnel (20) a été moulée dans la pièce de base et que la surface active (30) de la structure de Fresnel (20) est formée par le métal de la pièce porteuse (10).

4. Miroir de Fresnel selon l'une des revendications 1 à 3, sachant que pour réfléchir la lumière solaire sur une ligne fixe, la structure de Fresnel (20) présente des « dents » (23₁,23₂,23₃,23ₙ,) orientées parallèles les unes par rapport aux autres,

5. Unité collectrice (40), comprenant des miroirs de Fresnel conformément à l'une ou plusieurs des revendications 1 à 4 et un profilé central (41), sachant que le profilé central (41) contient au moins un tube collecteur (42) disposé le long de la ligne focale du miroir de Fresnel, tube qui est prévu à l'extrémité supérieure d'une nervure porteuse (44) dressée à la verticale, sachant que de l'extrémité inférieure de la nervure porteuse (44) des nervures latérales (45, 46) font saillie des deux côtés et que les nervures latérales (45, 46) présentent des moyens de liaison (14) qui interagissent avec des moyens de liaison (13) de segments en tôle (11, 11', 11", 11"') ou de profilés (12, 12', 12") de la structure Fresnel (20) du miroir de Fresnel, pour former une liaison.
